# EUROPEAN PATENT APPLICATION

(11) **EP 0 606 669 A1**
(43) Date of publication of application: **20.07.1994**
(21) Application number: 93200092.0
(22) Date of filing: 14.01.1993
(51) Int. Cl.: C22B 34/22, C01G 31/02, C01B 3/36, C10J 3/84

(54) **Carbon burn-off process**

(71) Applicant: SHELL INTERNATIONALE RESEARCH MAATSCHAPPIJ B.V., NL-2596 HR Den Haag (NL)
(72) Inventor: Tils, Henricus Martinus Gerardus Clemens, NL-1031 CM Amsterdam (NL)

(57) **Abstract**

Process for converting soot containing partially oxidized vanadium, obtainable by a gasification process, comprising subjecting such soot to an oxidizing treatment which is carried out under such conditions that the amount of vanadium pentoxide in the final product is at most 30% by weight, calculated on partially oxidized vanadium present in the soot.

## Description

The present invention relates to a process for burning off carbon, in particular to a process for converting soot obtainable by a gasification process.

It is well known that carbonaceous materials are produced in rather high amounts in various operations carried out commercially in industry, in particular in the oil industry. Examples of such operations comprise the heating of hydrocarbonaceous materials in furnaces, inevitably leading to carbonaceous deposits in various parts of the furnaces and transfer lines to other equipment; the well known catalytic cracking processes which are normally operated under conditions which allow deposit of carbonaceous materials on the catalytic particles which have then to be subjected to a regeneration treatment, as well as gasification processes such as gas, oil and coal gasification.

In the oil and coal gasification processes carbonaceous materials, often referred to as soot, are unavoidably produced. They are left over as residual carbon once the waste heat recovery step, following the gasification proper, has been operated with a view to produce high pressure steam. The reactor outlet gases from the waste heat recovery contain such residual carbon which is normally removed by a (multiple) water wash from said gas which is collected as clean gas.

A number of techniques are known in the art to deal with the soot produced in a gasification process. A well known and commercially applied technique comprises a pelletising process in which a distillate or a residual fuel oil is used to form agglomerates which can be separated from the wash water. This process is in essence a wet process, producing carbon pellets which can be remixed with feedstock or heavy fuel oil and, if necessary after homogenising, recycled to the gasification reactor or used as fuel.

Another possibility to process carbonaceous materials produced comprises the so-called Naphtha-Soot Recovery Process which is especially suitable for processing soot produced by gasification of heavy feedstocks such as visbroken residue or various kinds of asphalt. Again, a carbonaceous slurry is produced but after subjecting it to an aqueous washing treatment it is then subjected to a treatment with naphtha in an extractor, thus producing naphtha-soot agglomerates. Such agglomerates are separated from water present and subsequently converted into a pumpable mixture with the feedstock.

Since the removal of residual carbonaceous material, such as soot, appears to be a very expensive part of a total gasification process there is a large incentive for cheaper and more efficient ways of processing such residual materials. There is moreover, an inherent problem in upgrading vanadium containing residual materials (which is normally the case when processing rather heavy feedstocks, and which is becoming progressively more problematic when producing feedstocks containing relative large amounts of vanadium-containing components) in that under the upgrading conditions vanadium containing materials are converted into vanadium pentoxide which has the disadvantage that it renders the product rather sticky which makes it very difficult and uneconomic to handle.

It has now been found that it is possible to upgrade vanadium-containing residual materials, for instance residual materials obtained by a gasification process using vanadium containing feedstocks in such a way that the production of unwanted vanadium pentoxide is reduced substantially or even almost prevented. This makes the upgrading process much more flexible in terms of handling and further processing, if desired.

The present invention therefor relates to a process for converting soot containing partially oxidized vanadium, obtainable from a gasification process, comprising converting such soot to an oxidizing treatment which is carried out under such conditions that the amount of vanadium pentoxide in the final product is at most 30% by weight, calculated on partially oxidized vanadium present in the soot.

The expression soot containing partially oxidized vanadium is meant to be understood as referring to carbonaceous materials left over after thermal or catalytic treatment of vanadium containing feedstocks. Such feedstocks may have been subjected to a simple thermal treatment, for instance by heating them in a furnace to produce heat and possibly cracked products or may have been subjected to a gasification process in which they have been converted into one or more valuable gaseous materials leaving soot formed as unavoidable by-product under the process conditions.

During the thermal or catalytic treatment of the vanadium containing feedstocks referred to hereinabove, vanadium or vanadium-containing components present in the feedstock may have been converted into partially oxidized vanadium components. The process according to the present invention is eminently suitable for converting soot containing up to 30% by weight of vanadium pentoxide, but lower amounts of vanadium pentoxide can be processed equally well.

The process according to the present invention in very surprising in that it is capable of treating soot under oxidizing conditions during which carbonaceous materials are converted substantially into carbon monoxide and carbon dioxide without oxidizing partially oxidized vanadium compounds present therein into substantial amounts of vanadium pentoxide which is to be expected when subjecting such materials to an oxidizing atmosphere.

The process according to the present invention is in particular suitable for converting partially oxidized vanadium containing soot by burning off the carbonaceous material whilst the amount of vanadium pentoxide present in the final product is at most 25% by weight, and most preferably less than 15% by weight, calculated on partially oxidized vanadium present in the soot to be subjected to the oxidizing treatment.

Without wishing to be bound to any particular theory it is believed that the process according to the present invention accomplishes a reaction regime in which the amount of oxygen introduced into the reactor is much larger than that actually available when combusting the carbonaceous material into carbon monoxide and carbon dioxide. It would appear that the local presence of the oxidizing agent is governing the processes featuring in the carbon burn-off process and that a rather limited amount of oxidizing agent in the vicinity of the partially oxidized vanadium compounds prevents full oxidation of such compounds into thermodynamically favoured vanadium pentoxide.

The invention according to the present invention is suitably carried out in a hearth furnace. Such furnaces are well known in combustion technology and need no detailed description. Preferably, the process according to the present invention is carried out in a so-called multiple hearth furnace. Multiple hearth furnaces are known under various names, for instance as the Herreshoff and the Pacific multiple hearth furnace. Reference is made to Perry's Chemical Engineers' Handbook, 6th Edition, 1984, Section 20-46.

Such furnaces consist of a number, e.g. up to 10, of annular-shaped hearths mounted one above the other. There are raking arms on each hearth driven from a common shaft located in the centre of the furnace. The feed is charged at or near the centre of the upper hearth. The arms move the charge outward to the periphery, where it falls to the next (lower) hearth. It is then moved again to the centre, from which it falls to the next lower hearth. Finally the charge reaches the bottom hearth and is removed from the furnace.

Inlets for the oxidizing agents, suitably air, can be located at the sides of the appropriate hearths. Depending on the distance above the carbonaceous material present on the hearths, the speed of the raking arms present in the carbonaceous materials and the geometry of the inlets for the oxidizing agent(s) to be used, the degree of conversion, and therefore the level of vanadium pentoxide, can be controlled and adjusted if necessary. It has been found that exceptionally good results can be obtained when the surface layer of the carbonaceous material is being subjected to the treatment with the oxidizing agent. When operating the multiple hearth furnace in this manner the amount of partially oxidized vanadium remains surprisingly high, calculated on partially oxidized vanadium present in the carbonaceous material to be subjected to carbon burn-off.

The process according to the present invention is carried out at a temperature below 900 °C, preferably in the range between 700 °C and 850 °C. It should be noted that surprisingly good results are obtained when operating at a temperature which is above the melting point of vanadium pentoxide; in other words, no adverse effects are observed when operating under a temperature regime in which vanadium pentoxide is normally present in liquid form which will favour stickiness.

The process according to the present invention can be suitably applied when using so-called filter-cakes, comprising up to 35% by weight of soot in water or another appropriate liquid carrier. Such filter-cakes can be obtained, as explained hereinbefore, in the gasification of heavy carbonaceous materials such as residual materials from an oil gasification process. The filter-cakes can contain up to 70% by weight of partially oxidized vanadium (on dry basis), depending on the feedstock which has been used in the soot-forming process. Preferably, the filter-cakes contain up to 35% by weight of partially oxidized vanadium (on dry basis).

It is also possible to operate the present process with dry soot. Dry soot is normally obtained from thermal conversion processes and has not been subjected to a wash treatment. Again, the process according to the present invention can be carried out eminently when using soot containing up to 70% by weight of partially oxidized vanadium, depending on the feedstock which has been used in the thermal conversion process. Preferably, the dry soot contains up to 35% by weight of partially oxidized vanadium.

It has been found that the process according to the present invention is best carried out under conditions which leave a substantial amount of oxygen in the gaseous effluent emanating from the first or from the uppermost hearth of the reactor. Suitably, the gaseous effluent contains at least 12% by volume of oxygen and preferably more than 15% by weight of oxygen, calculated on air under standard conditions of temperature and pressure.

If desired, the process according to the present invention can be carried out in the presence of a moderator. This means that part of the oxidizing agent can be replaced by steam, nitrogen or carbon dioxide, or a mixture of steam, nitrogen and/or and carbon dioxide. It is thought that the presence of a moderator allows operating at a lower temperature.

It has further been found that the process according to the present invention is carried out very successfully when the ratio between the mass transfer coefficient of the oxidizing agent and the rate constant of carbon combustion is smaller than 0.1, in particular when this ratio is smaller than 0.01.

The process according to the present invention is preferably used as part of an integrated process for the conversion of hydrocarbons which are liquid under standard conditions of temperature and pressure by converting such hydrocarbons containing vanadium into raw synthesis gas in the presence of oxygen and a moderating agent in a partial oxidation reactor, generating high temperature steam from the hot gases leaving the reactor and removing remaining residual carbon contained in the reactor outlet gas by means of one or more washing steps, and subjecting the partially oxidized vanadium containing soot to an oxidizing treatment in accordance with the present invention.

The process according to the present invention can be suitably applied in the SHELL Gasification Process (SGP) which is a non-catalytic partial oxidation process with which a wide variety of hydrocarbonaceous feedstocks can be converted into synthesis gases comprising mainly hydrogen and carbon monoxide which can be used in many industrial applications such as the production of ammonia, methanol, hydrogen, oxo-alcohols, fuel gas, reduction gas and town gas. Also combinations of various processes can be considered such as ammonia and methanol or methanol and hydrogen.

If desired the partially oxidized vanadium produced in the process according to the present invention can be used in further operations as it constitutes a valuable feedstock for the metallurgical industry.

## Claims

1. Process for converting soot containing partially oxidized vanadium, obtainable by a gasification process, comprising subjecting such soot to an oxidizing treatment which is carried out under such conditions that the amount of vanadium pentoxide in the final product is at most 30% by weight, calculated on partially oxidized vanadium present in the soot.

2. Process according to claim 1, in which the oxidizing treatment is carried out in a hearth furnace.

3. Process according to claim 2, in which process use is made of a multiple hearth furnace.

4. Process according to one or more of claims 1 to 3, in which process the oxidizing treatment is carried out at a temperature below 900 °C.

5. Process according to claim 4, in which the oxidizing treatment is carried out at a temperature in the range between 700 °C and 850 °C.

6. Process according to one or more of claims 1 to 5, in which soot containing up to 70% by weight, preferably up to 35% by weight (on dry basis), of partially oxidized vanadium is subjected to the oxidizing treatment.

7. Process according to one or more of claims 1 to 5, in which substantially dry soot is subjected to the oxidizing treatment.

8. Process according to one or more of claims 1 to 7, in which the oxidizing treatment is carried out in such a way that the amount of vanadium pentoxide in the final product is at most 25% by weight, preferably less than 15% by weight, calculated on partially oxidized vanadium present in the soot.

9. Process according to one or more of claims 1 to 8, in which the gaseous effluent contains at least 12% by volume of oxygen, preferably more than 15% by volume of oxygen, calculated on air under standard conditions of temperature and pressure.

10. Process according to one or more of claims 1 to 8, in which process the oxidizing treatment is carried out in the presence of a moderator.

11. Process according to claim 10, in which process steam, nitrogen or carbon dioxide is used as a moderator.

12. Process according to one or more of claims 1 to 10, in which process the oxidizing treatment is carried out under conditions which render the ratio between the mass transfer coefficient of the oxidizing agent and the rate constant of carbon combustion < 0.1.

13. Process for the conversion of hydrocarbons which are liquid under standard conditions of temperature and pressure by converting such hydrocarbons containing vanadium into raw synthesis gas in the presence of oxygen and a moderating agent in a partial oxidation reactor, generating high temperature steam from the hot gases leaving the reactor and removing remaining residual carbon contained in the reactor outlet gas by means of one or more washing steps, and subjecting the partially oxidized vanadium containing soot to a process according to one or more of claims 1 to 12.

14. Partially oxidized vanadium containing at most 30% by weight of vanadium pentoxide whenever obtained by a process according to one or more of the previous claims.
